(19) **Europäisches Patentamt**
**European Patent Office**
**Office européen des brevets**

(11) **EP 4 708 151 A1**

(12) **EUROPEAN PATENT APPLICATION**
published in accordance with Art. 153(4) EPC

(43) Date of publication:
**11.03.2026 Bulletin 2026/11**

(51) International Patent Classification (IPC):
**G06N 3/10** (2006.01)

(21) Application number: **24810218.8**

(22) Date of filing: **09.05.2024**

(86) International application number:
**PCT/CN2024/092000**

(87) International publication number:
**WO 2024/239971 (28.11.2024 Gazette 2024/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **24.05.2023 CN 202310597929**

(71) Applicant: **Beijing Horizon Information
Technology Co., Ltd.
Beijing 100094 (CN)**

(72) Inventors:
• **ZHANG, Yinan
Beijing 100094 (CN)**
• **LI, Delin
Beijing 100094 (CN)**

(74) Representative: **Casalonga
Casalonga & Partners
Bayerstraße 71/73
80335 München (DE)**

(54) **COMPILATION METHOD AND APPARATUS FOR NEURAL NETWORK MODEL, INFERENCE METHOD AND APPARATUS FOR NEURAL NETWORK MODEL, AND DEVICE AND MEDIUM**

(57) Disclosed in the embodiments of the present disclosure are a compilation method and apparatus for a neural network model, an inference method and apparatus for a neural network model, and a device and a medium. The compilation method comprises: acquiring a first model corresponding to a neural network model to be subjected to compilation; using, as a target network layer, any one of at least one network layer which includes a preset operation in the first model, and converting the preset operation of the target network layer into a convolution operation which is supported by a neural network processor, so as to obtain a converted first network layer, wherein the preset operation is an operation comprising a multiply - accumulate operation; on the basis of the converted first network layer, obtaining an optimization model corresponding to the first model; and according to the optimization model, generating a target instruction sequence that is executable by the neural network processor and corresponds to said neural network model. In the embodiments of the present disclosure, a preset operation comprising a multiply-accumulate operation may be implemented by means of a convolution operation, such that the preset operation of a model is accelerated by means of a neural network processor, thereby facilitating an improvement in the inference speed of the model.

FIG. 2

Description

**CROSS-REFERENCE TO RELATED APPLICATION**

This disclosure claims the benefit of priority to Chinese patent application No. CN202310597929.6 filed before China National Intellectual Property Administration on May 24, 2023, titled COMPILATION METHOD AND APPARATUS FOR NEURAL NETWORK MODEL, INFERENCE METHOD AND APPARATUS FOR NEURAL NETWORK MODEL, AND DEVICE AND MEDIUM, content of which is incorporated herein by reference in its entirety.

**FIELD OF THE INVENTION**

This disclosure relates to field of artificial intelligence technology, and more particularly, to a method and apparatus for compiling a neural network model, a method and apparatus for inference with the neural network model, a device, and a medium.

**BACKGROUND OF THE INVENTION**

In recent years, a neural network model (which may be referred to as model for short hereinafter) based on a network structure such as Transformer is widely applied in various fields or scenes wherein image processing, text processing, speech processing, etc., are needed, such as a scene of visual perception in autonomous driving, a scene of medical image processing in field of medicine, a scene of speech recognition in human-machine interaction, a scene of office text recognition, etc. To improve a speed of inference with the neural network model, in general, it is to accelerate a process of inference with the neural network model using a neural network processor. The neural network processor is mainly configured for accelerating a convolutional neural network (CNN). However, in general, a model based on a network structure such as Transformer further comprises operations such as a dot-product operation, a matrix-multiplication operation, a linear operation at a linear layer, etc., wherein these operations easily lead to a low speed of inference with the model.

**SUMMARY OF THE INVENTION**

Embodiments of this disclosure provide a method and apparatus for compiling a neural network model, a method and apparatus for inference with the neural network model, a device, and a medium, capable of improving a speed of inference with the model.

One aspect of this disclosure provides a method for compiling a neural network model, comprising: obtaining a first model corresponding to a to-be-compiled neural network model; taking any one network layer among at least one network layer comprising a preset operation in the first model as a target network layer, and converting the preset operation in the target network layer into a convolution operation supported by a neural network processor, to obtain a first network layer, wherein the preset operation is an operation comprising a multiply-accumulate operation; obtaining an optimized model corresponding to the first model based on the first network layer; and generating, based on the optimized model, a target instruction sequence executable by the neural network processor and corresponding to the to-be-compiled neural network model.

Another aspect of this disclosure provides a method for inference with a neural network model, comprising: obtaining an input tensor corresponding to the neural network model and a target instruction sequence corresponding to the neural network model, wherein the target instruction sequence is obtained based on the method for compiling a neural network model according to any one embodiment herein; transmitting the input tensor and the target instruction sequence to a neural network processor; and processing the input tensor by executing the target instruction sequence on the neural network processor, to obtain an inference result corresponding to the input tensor.

Still another aspect of this disclosure provides an apparatus for compiling a neural network model, comprising: a first obtaining module, configured for obtaining a first model corresponding to a to-be-compiled neural network model; a first processing module, configured for taking any one network layer among at least one network layer comprising a preset operation in the first model as a target network layer, and converting the preset operation in the target network layer into a convolution operation supported by a neural network processor, to obtain a first network layer, wherein the preset operation is an operation comprising a multiply-accumulate operation; a second processing module, configured for obtaining an optimized model corresponding to the first model based on the first network layer; and a third processing module, configured for generating, based on the optimized model, a target instruction sequence executable by the neural network processor and corresponding to the to-be-compiled neural network model.

Yet another aspect of this disclosure provides an apparatus for inference with a neural network model, comprising: a second obtaining module, configured for obtaining an input tensor corresponding to the neural network model and a target instruction sequence corresponding to the neural network model, wherein the target instruction sequence is obtained based on the method for compiling a neural network model according to any one embodiment herein; a transmitting module, configured for transmitting the input tensor and the target instruction sequence to a neural network processor; and the neural network processor, configured for processing the input tensor by executing the target instruction sequence, to obtain an inference result corresponding to the input tensor.

Still another aspect of this disclosure provides a computer-readable storage medium, wherein the storage medium stores a computer program, and the computer program is configured for implementing the method for compiling a neural network model according to any one embodiment of this disclosure, or implementing the method for inference with a neural network model according to any one embodiment of this disclosure.

Yet another aspect of this disclosure provides an electronic device, wherein the electronic device comprises: a processor; and a memory configured for storing processor-executable instructions, wherein the processor is configured for reading the executable instructions from the memory, and executing the instructions to implement the method for compiling a neural network model according to any one embodiment of this disclosure.

Still another aspect of this disclosure provides a computer program product. When instructions in the computer program product are executed by a processor, the method for compiling a neural network model according to any one embodiment of this disclosure is implemented, or the method for inference with a neural network model according to any one embodiment of this disclosure is implemented.

Based on a method and apparatus for compiling a neural network model, a method and apparatus for inference with the neural network model, a device, and a medium according to embodiments of this disclosure, it is enabled to convert, during model compilation, the preset operation comprising the multiply-accumulate operation, such as the dot-product operation, the matrix-multiplication operation, the linear operation, etc., into the convolution operation supported by the neural network processor, enabling the generated target instruction sequence to implement the preset operation through the convolution operation, thereby enabling to accelerate the preset operation of the model using a neural network processor for accelerating a convolutional neural network, which helps improve the speed of inference with the model.

## BRIEF DESCRIPTION OF THE DRAWINGS

FIG. 1 is a flowchart of a method for compiling a neural network model according to an illustrative embodiment of this disclosure;

FIG. 2 is a flowchart of a method for compiling a neural network model according to an illustrative embodiment of this disclosure;

FIG. 3 is a flowchart of a method for compiling a neural network model according to another illustrative embodiment of this disclosure;

FIG. 4 is a flowchart of a method for compiling a neural network model according to still another illustrative embodiment of this disclosure;

FIG. 5 is a diagram of a principle for transforming a data structure of a first input tensor according to an illustrative embodiment of this disclosure;

FIG. 6 is a diagram of a principle for transforming a data structure of a second input tensor according to an illustrative embodiment of this disclosure;

FIG. 7 is a diagram of a principle for transforming a data structure of a second input tensor according to another illustrative embodiment of this disclosure;

FIG. 8 is a diagram of a principle for convolution operation of a third input tensor with a convolution weight tensor according to an illustrative embodiment of this disclosure;

FIG. 9 is a flowchart of a method for inference with a neural network model according to an illustrative embodiment of this disclosure;

FIG. 10 is a diagram of a structure of an apparatus for compiling a neural network model according to an illustrative embodiment of this disclosure;

FIG. 11 is a diagram of a structure of an apparatus for compiling a neural network model according to another illustrative embodiment of this disclosure;

FIG. 12 is a diagram of a structure of a first processing module 502 according to an illustrative embodiment of this disclosure;

FIG. 13 is a diagram of a structure of an apparatus for inference with a neural network model according to an illustrative embodiment of this disclosure; and

FIG. 14 is a diagram of a structure of an electronic device according to an embodiment of this disclosure.

**DETAILED DESCRIPTION OF THE EMBODIMENTS**

To explain this disclosure, illustrative embodiments of this disclosure are elaborated below with reference to accompanying drawings. Clearly, the embodiments described are merely some, rather than all, embodiments of this disclosure. It should be understood that this disclosure is not limited to the illustrative embodiments.

It should be noted that unless otherwise specified, the scope of this disclosure is not limited to relative arrangements, numeric expressions, and numerical values of components and steps described in these embodiments.

Disclosure overview

In implementing this disclosure, the inventor discovers that in recent years, a neural network model (which may be referred to as model for short hereinafter) based on a network structure such as Transformer is widely applied in various fields or scenes wherein image processing, text processing, speech processing, etc., are needed, such as a scene of visual perception in autonomous driving, a scene of medical image processing in field of medicine, a scene of speech recognition in human-machine interaction, a scene of office text recognition, etc. To improve a speed of inference with the neural network model, in general, it is to accelerate a process of inference with the neural network model using a neural network processor. The neural network processor is mainly configured for accelerating a convolutional neural network (CNN). However, in general, a model based on a network structure such as Transformer further comprises operations such as a dot-product operation, a matrix-multiplication operation, a linear operation at a linear layer, etc., wherein these operations easily lead to a low speed of inference with the model.

Illustrative overview

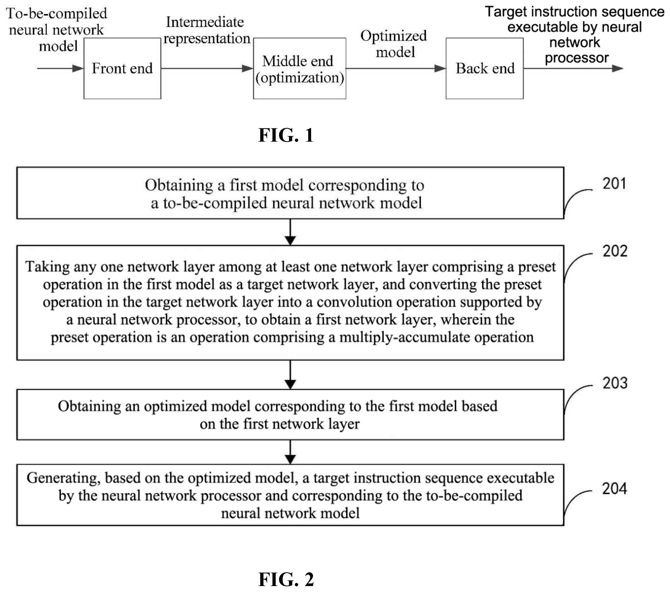

FIG. 1 is an illustrative scene of application of a method for compiling a neural network model according to this disclosure.

A neural network model having a reset operation such as a dot-product operation, a matrix-multiplication operation, a linear operation at a linear layer, etc., for example, a respective neural network model of an image processing model configured for image processing for an environment around a vehicle or an intelligent cockpit in a scene of autonomous driving, such as target detection model, a semantic segmentation model, and / or an image classification model, a speech recognition model configured for user speech interaction inside a vehicle, etc., may be set to be a to-be-compiled neural network model; using the method for compiling a neural network model according to this disclosure, by obtaining a first model corresponding to the to-be-compiled neural network model at a compilation stage, the first model may be optimized, to convert at least one preset operation comprised in the first model into a convolution operation supported by a neural network processor, to obtain an optimized model; and then, a target instruction sequence executable by the neural network processor may be generated based on the optimized model, enabling the target instruction sequence to implement the preset operation through the convolution operation, thereby enabling to accelerate the preset operation of the model using a neural network processor for accelerating a convolutional neural network, which helps improve a speed of inference with the model. As shown in FIG. 1, compilation of a neural network model may be implemented through a compiler, wherein the compiler may comprise a front end, a middle end, and a back end, wherein the front end, the middle end, and the back end may respectively comprise different modular compiler components and toolchains. The front end may convert the to-be-compiled neural network model in a programming language into an intermediate representation model. The middle end may optimize the intermediate representation model to obtain the optimized model. The back end may convert the optimized model into a machine-executable target instruction sequence. The target instruction sequence may comprise an sequence of instructions executable by a neural network processor, and the neural network processor may complete real-time inference with the neural network by executing these instructions. The method for compiling a neural network model according to this disclosure may be implemented at any stage of the front end, the middle end, and the back end during compilation, specifics of which are not limited. That is, the first model may be a model described in the programming language at the front end, an intermediate representation model, or a model described by an initial sequence of instructions generated by the back end, specifics of which may be set as needed.

The method for compiling a neural network model according to this disclosure is applicable to a scene or field of acceleration comprising the preset operation on any neural network processor, such as a scene of autonomous driving, a scene of medical image processing, and a scene of speech interaction, etc., with a specific scene and field not limited.

Illustrative method

FIG. 2 is a flowchart of a method for compiling a neural network model according to an illustrative embodiment of this disclosure. This embodiment is applicable to an electronic device, specifically an electronic device such as a server, a terminal device, etc., for example. As shown in FIG. 2, the method according to embodiments of this disclosure may comprise steps as follows.

Step 201, Obtaining a first model corresponding to a to-be-compiled neural network model

The to-be-compiled neural network model may be a trained neural network model that comprises at least one network layer comprising a preset operation, such as a trained target detection model, a trained semantic segmentation model, etc., based on Transformer, with a specific type and a specific function of the neural network model being not limited. The first model may be a model described in a programming language and corresponding to the to-be-compiled neural network model, an intermediate representation model corresponding to the to-be-compiled neural network model, or a model described by a generated initial sequence of instructions corresponding to the to-be-compiled neural network model. Taking the first model being an intermediate representation model as an example, the to-be-compiled neural network model in a programming language may be converted into an intermediate representation using a neural network compiler, to obtain the first model of the intermediate representation corresponding to the to-be-compiled neural network model, wherein a specific mode of converting the model in the programming language into the intermediate representation may be any mode that can be implemented as needed, which is not elaborated in embodiments of this disclosure. An intermediate representation may be an intermediate language description between a programming language and a machine-recognizable sequence of instructions, and may also be referred to as a computation graph. A computation graph may describe computational logic of the neural network model through operator nodes and dependency between the operator nodes. An operator node may comprise a loading node, a computing node, and a storage node. A loading node may be configured for loading an input tensor of a computing node to perform computation. A computing node may be configured for performing respective computation on an input tensor. A storage node may be configured for storing a computing result from a computing node. A computation graph of the neural network model may be formed based on a topological relation of dependency among a plurality of operator nodes. A type of an operator node may correspond to an operation type in the neural network model, and for example, may comprise an operator node corresponding to a convolution operation, an operator node corresponding to a pooling operation, etc. According to different network layers in the neural network model, the computation graph may also be divided into a plurality of computation sub-graphs, specifics of which may be set as needed.

In an optional example, step 201 may be executed either by a processor calling respective instructions stored in a memory, or by a first obtaining module run by a processor.

Step 202, Taking any one network layer among at least one network layer comprising a preset operation in the first model as a target network layer, and converting the preset operation in the target network layer into a convolution operation supported by a neural network processor, to obtain a first network layer, wherein the preset operation is an operation comprising a multiply-accumulate operation

The preset operation may comprise an operation, such as a dot-product operation, a linear operation, a matrix-multiplication operation, etc., which comprises a multiply-accumulate operation. The dot-product operation may refer to a sum of products of corresponding elements of two vectors (one-dimensional tensors), wherein for example, for vector $a = (a1, a2, a3)$ and vector $b = (b1, b2, b3)$, a dot-product operation of vector $a$ and vector b may be represented as $a \cdot b = a1 * b1 + a2 * b2 + a3 * b3$. The matrix-multiplication operation may represent multiplying an M*K matrix (a two-dimensional tensor) A by a K*N matrix B to obtain an M*N result, which may be represented as follows:

$$A = \begin{bmatrix} a_{11} & a_{12} & a_{13} \\ a_{21} & a_{22} & a_{23} \end{bmatrix}$$

$$B = \begin{bmatrix} b_{11} & b_{12} \\ b_{21} & b_{22} \\ b_{31} & b_{32} \end{bmatrix}$$

$$C = AB = \begin{bmatrix} a_{11} & a_{12} & a_{13} \\ a_{21} & a_{22} & a_{23} \end{bmatrix} \begin{bmatrix} b_{11} & b_{12} \\ b_{21} & b_{22} \\ b_{31} & b_{32} \end{bmatrix}$$

$$= \begin{bmatrix} a_{11}b_{11} + a_{12}b_{21} + a_{13}b_{31} & a_{11}b_{12} + a_{12}b_{22} + a_{13}b_{32} \\ a_{21}b_{11} + a_{22}b_{21} + a_{23}b_{31} & a_{21}b_{12} + b_{22}b_{22} + a_{23}b_{32} \end{bmatrix}$$

The linear operation may represent an operation of weighting a set of data according to certain weights, which may be represented as follows:

$$y = a_1 x_1 + a_2 x_2 + \cdots a_m x_m$$

wherein $a_i$ (i = 1, 2, ..., or m, m being an integer greater than 1) represents a weight given to $x_i$.

A data structure of an input tensor or an output tensor of a network layer or operation in a neural network may comprise a type of such as one-dimensional, two-dimensional, three-dimensional, four-dimensional, etc.

A tensor of a two-dimensional data structure may be referred to as two-dimensional feature data, and may be shown as a data plane which consists of a plurality of points and has a certain height (H) and width (W). Any one point in the data plane may be referred to as a data item (or element) of the feature data, and may be represented by a 2-tuple (h, w), wherein h may represent a row of the data plane the data item is in from top to bottom (i.e., positioning in the height dimension), and w may represent a column of the data plane the data item is in from left to right (i.e., positioning in the width dimension). The 2-tuple (h, w) may be referred to as a data item position of the feature data, which is two-dimensional positioning in the height dimension and the width dimension. The data item at the data item position (h, w) may correspond to a data item with a row number h and a column number w in the feature data. A tensor of a two-dimensional data structure may comprise, for example, an input tensor and an output tensor of a matrix-multiplication operation. A one-dimensional input tensor may be represented as two-dimensional feature data with the height or width being 1. For example, an input tensor of a dot-product operation or an input tensor of a linear operation may be represented as a 1*K two-dimensional tensor, wherein 1 represents the height, and K represents the width.

A tensor of a three-dimensional data structure may be referred to as three-dimensional feature data, and may be shown as a data cube consisting of a plurality of points and having a certain height (H), width (W), and depth (C). Any one point in the data cube may be referred to as a data item of the feature data, and may be represented by a 3-tuple (h, w, c), wherein h may represent a row of the data cube the data item is in from top to bottom (i.e., positioning in the height dimension), w may represent a column of the data cube the data item is in from left to right (i.e., positioning in the width dimension), and c may represent a channel of the data cube the data item is in from front to back (i.e., positioning in the depth dimension). A tensor of a three-dimensional data structure may comprise, for example, an input tensor of a convolution layer or a convolution operation.

A 2-tuple (h, w) in the 3-tuple (h, w, c) may be referred to as a data item position of the feature data, which is two-dimensional positioning in the height dimension and the width dimension. The data item at the data item position (h, w) may correspond to a data item on any one channel with a row number h and a column number w in the feature data. Thus, any one data item in the feature data may be positioned through a corresponding data item position and a channel number of a channel the data item is in.

For a batch network layer or operation, in addition to the height dimension and the width dimension, a number dimension may further be comprised, such as in an input tensor of a batch matrix multiplication (batch matmul) operation. The batch matrix-multiplication operation may be configured for performing respective matrix multiplication of a plurality of left matrices and a plurality of right matrices. For example, a B*M*N batch matrix is obtained by multiplying a B*M*K batch matrix (i.e., B left matrices) respectively by a corresponding B*K*N batch matrix (i.e., B right matrices). In this case, a tensor of a three-dimensional data structure may be represented as a certain number of data planes with a certain height and width, wherein each data item may be represented as a 3-tuple (k, h, w), wherein k represents a data plane the data item is in (i.e., positioning in the number dimension), h may represent a row of the data plane k the data item is in from top to bottom (i.e., positioning in the height dimension), and w may represent a column of the data plane k the data item is in from left to right (i.e., positioning in the width dimension).

A tensor of a four-dimensional data structure may be referred to as four-dimensional feature data, and may be shown as a certain number of data cubes consisting of a plurality of points. Each data cube has a certain height, width, and depth. Each data item in the feature data may be represented by a 4-tuple (k, h, w, c), wherein k represents which data cube the data item is in (i.e., positioning in the number dimension), h may represent a row of the data cube k the data item is in from top to bottom (i.e., positioning in the height dimension), w may represent a column of the data cube k the data item is in from left to right (i.e., positioning in the width dimension), and c may represent a channel of the data cube k the data item is in from front to back (i.e., positioning in the depth dimension). A tensor of a four-dimensional data structure may comprise, for example, an input tensor of a batch convolution layer or convolution operation.

A weight parameter (or weight tensor) for a convolution layer or a convolution operation in the neural network may be a four-dimensional data or a four-dimensional tensor, and each kernel of the weight parameter may be a three-dimensional data. Similar to the representation of the feature data, each kernel of the weight parameter may also be shown as a data cube consisting of a plurality of points and having a certain height, width, and depth. Any one point in the data cube may be referred to as an element of the weight parameter or an element of a certain kernel of the weight parameter. Similar to the feature data, an element in a kernel of the weight parameter may be positioned using a 3-tuple (h, w, c). In addition, an element in the weight parameter may be positioned using a 4-tuple (k, h, w, c), wherein k may represent a kernel of the weight parameter the element is in (i.e., positioning in the number dimension), h may represent a row of the kernel k the element is in from top to bottom (i.e., positioning in the height dimension), w may represent a column of the kernel k the element is in from left to right (i.e., positioning in the width dimension), and c may represent a channel of the kernel k the element is in from front to back (i.e., positioning in the depth dimension).

A 4-tuple (k, h, w, c) representing an element in the weight parameter or a 2-tuple (h, w) in a 3-tuple (h, w, c) representing an element in a kernel k may be referred to as an element position in the kernel k of the weight parameter, which is two-dimensional positioning in the height dimension and the width dimension. In the kernel k, the element at the element position (h, w) may be an element on any one channel with a row number h and a column number w in the kernel k. Thus, any element in the kernel k may be positioned through a corresponding element position and a channel number of a channel the element is in.

In some optional embodiments, a network layer comprising the preset operation in the first model may be determined according to a preset determination rule. The preset determination rule may be determined based on a related operation parameter for a respective network layer of the neural network model described in the first model. For example, if the first model is an intermediate representation model, a network layer in the first model may be represented as a computation sub-graph in the computation graph of the model, and it may be determined whether the layer comprises a preset operation based on operation description information of an operator node of the computation sub-graph. If the first model is a model described in a programming language, it may be determined whether the layer comprises a preset operation based on specific operation description information in the programming language.

In some optional embodiments, a respective identification may also be preset for a network layer comprising a preset operation, to facilitate determining whether a network layer comprises the preset operation, wherein specifics of the preset determination rule are not limited in this embodiment, as long as it is enabled to determine whether a layer comprises the preset operation.

In some optional embodiments, the convolution operation supported by the neural network processor may be a pointwise convolution operation. The pointwise convolution operation may change just a number of channels of an input tensor, without changing a size of the input tensor in the height dimension and the width dimension. A convolution kernel for pointwise convolution may have a size 1 * 1, and a number of channels C. That is, each convolution kernel may be a vector comprising C elements in a channel direction. When performing convolution on an H*W*C (height*width*number of channels) input tensor, a multiply-accumulate operation on the convolution kernel and elements of the C channels at each hw (h=1, 2, ... , or H, and w= 1, 2, ... , or W) position of the input tensor may be performed, to obtain a convolution result for a channel corresponding to the convolution kernel. A convolution result for one channel may be obtained using each convolution kernel. The number of channels of the input tensor may be changed by setting a number of convolution kernels. For example, if the number of convolution kernels is C1, a final convolution result obtained may be an H*W*C1 output tensor, wherein H represents the height of the output tensor, W represents the width of the output tensor, and C1 represents the number of channels of the output tensor. It may be seen that the multiply-accumulate operation may be implemented by a pointwise convolution process. Based on this, a preset operation, such as the dot-product operation, the matrix-multiplication operation, the linear operation, etc., which comprises the multiply-accumulate operation, may be converted into the pointwise convolution operation, thereby enabling to implement the preset operation through the pointwise convolution operation, to facilitate accelerating the preset operation using the neural network processor, thereby improving a speed of inference with the model.

In some optional embodiments, as needed, the at least one network layer may be set to one or more network layers comprising the preset operation. For example, the at least one network layer may comprise each network layer comprising the preset operation, specifics of which are not limited. Each network layer of the at least one network layer comprising the preset operation may be set to be the target network layer. The preset operation in the target network layer is converted into the convolution operation supported by the neural network processor, thereby enabling to determine the first network layer based on the converted convolution operation.

In some optional embodiments, converting the preset operation to the convolution operation may be implemented by reconstructing a computation sub-graph of the target network layer. An operator node representing the preset operation in the computation sub-graph may be converted, according to a certain conversion rule, into an operator node comprising transformation of the data structure of the input tensor and the convolution operation, to adapt the input tensor of the preset operation to the convolution operation, and then an output tensor corresponding to the preset operation may be obtained by the convolution operation. The first network layer may be obtained combining the converted operation corresponding to the preset operation and an operation other than the preset operation in the target network layer. Based on this, a first network layer corresponding to a respective network layer comprising the preset operation may be obtained.

In an optional example, step 202 may be executed either by a processor calling respective instructions stored in a memory, or by a first processing module run by a processor.

Step 203, Obtaining an optimized model corresponding to the first model based on the first network layer

After each network layer to be converted is optimized, the optimized model corresponding to the first model may be obtained based on the first network layer and a network layer other than the each network layer to be converted.

In some optional embodiments, during model optimization, in addition to the optimization of converting the preset operation into the convolution operation, any other optimization that can be implemented may be performed on the first model as needed, such as, taking the first model of the intermediate representation as an example, optimization of improving utilization of the neural network processor by partitioning a computation sub-graph of a preset network layer in an intermediate representation stage, etc., which is not limited in this embodiment. Finally, the optimized model may be obtained based on each optimized network layer. The optimized model may also be referred to as a reconstructed optimized computation graph.

In an optional example, step 203 may be executed either by a processor calling respective instructions stored in a memory, or by a second processing module run by a processor.

Step 204, Generating, based on the optimized model, a target instruction sequence executable by the neural network processor and corresponding to the to-be-compiled neural network model

After the optimized model has been obtained, the optimized model may be compiled using a related component and toolchain of the neural network compiler, to generate the target instruction sequence executable by the neural network processor. For example, if the first model is a model in a programming language, the optimized model may be compiled into the target instruction sequence using the front end, the middle end, and the back end of the neural network compiler. As another example, if the first model is an intermediate representation model, the optimized model may be compiled using a back end component and toolchain of the neural network compiler, to generate the target instruction sequence.

In an optional example, step 204 may be executed either by a processor calling respective instructions stored in a memory, or by a third processing module run by a processor.

The method for compiling a neural network model according to this embodiment enables to convert, during model compilation, the preset operation comprising the multiply-accumulate operation, such as the dot-product operation, the matrix-multiplication operation, the linear operation, etc., into the convolution operation supported by the neural network processor, enabling the generated target instruction sequence to implement the preset operation through the convolution operation, thereby enabling to accelerate the preset operation of the model using a neural network processor for accelerating a convolutional neural network, which helps improve the speed of inference with the model.

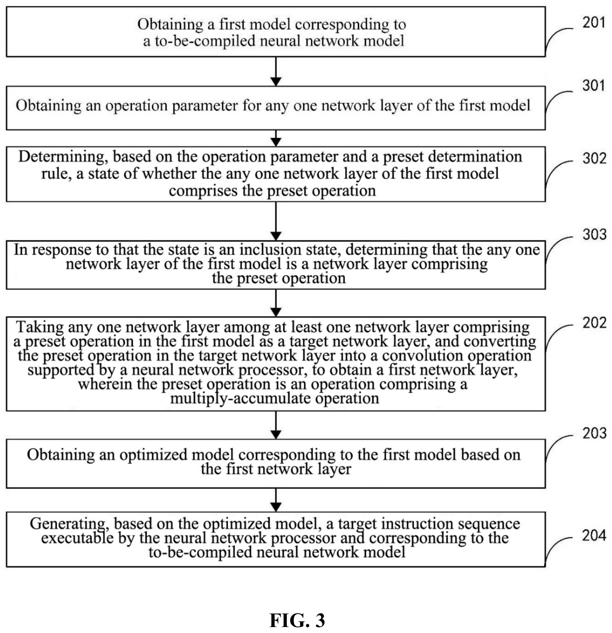

FIG. 3 is a flowchart of a method for compiling a neural network model according to another illustrative embodiment of this disclosure.

In some optional embodiments, the method according to embodiments of this disclosure may further comprise steps as follows, after the obtaining a first model corresponding to a to-be-compiled neural network model of step 201.

Step 301, Obtaining an operation parameter for any one network layer of the first model.

The operation parameter may be a related parameter describing the network layer. For example, the operation parameter may comprise an identification parameter, an input related parameter, an operation related parameter, an output related parameter, etc., of the network layer, specifics of which may be set as needed. The operation parameter comprises operation related information, which may be configured for determining whether the network layer comprises the preset operation, and is parameters such as conv, pointwiseconv, etc., which represent various convolution operations (which may comprise a size of a convolution kernel, a stride, etc.), a parameter representing matrix multiplication (which may comprise a first matrix, a second matrix, and/or a matrix multiplying operation), etc. Different types of network layers may comprise different operation parameters, specifics of which may be set as needed.

In some optional embodiments, the operation parameter may be description information related to an operator node of the computation sub-graph of the network layer, for identifying an operation type corresponding to the operator node in the computation sub-graph, specifics of which are not limited.

In an optional example, step 301 may be executed either by a processor calling respective instructions stored in a memory, or by a parameter obtaining module run by a processor.

Step 302, Determining, based on the operation parameter and a preset determination rule, a state of whether the any one network layer of the first model comprises the preset operation.

The preset determination rule may be set according to a mode of how related information of the preset operation is described in the operation parameter, and the preset determination rule may be configured for determining, based on the operation parameter, a state of whether the any network layer comprises the preset operation. The state may comprise an inclusion state and a noninclusion state.

In an optional example, step 302 may be executed either by a processor calling respective instructions stored in a memory, or by a first determining module run by a processor.

Step 303, In response to that the state is an inclusion state, determining that the any one network layer of the first model is a network layer comprising the preset operation.

In some optional embodiments, respective network layers of the first model may be traversed. For a traversed network layer, a state of whether the network layer comprises the preset operation may be determined based on the operation parameter for the network layer. If the state is the inclusion state, it may be determined that the network layer is a network layer comprising the preset operation, and then the optimization processing of converting the preset operation into the convolution operation supported by the neural network processor according to embodiments of this disclosure may be performed on the network layer, to obtain an optimization result corresponding to the network layer. If the network layers of the first model are all traversed, the optimization of the first model is completed, to obtain the optimized model corresponding to the first model.

In an optional example, step 303 may be executed either by a processor calling respective instructions stored in a memory, or by a second determining module run by a processor.

In this embodiment, a network layer comprising the preset operation in the first model is identified according to the preset determination rule, providing effective reference basis for determining a network layer to be optimized.

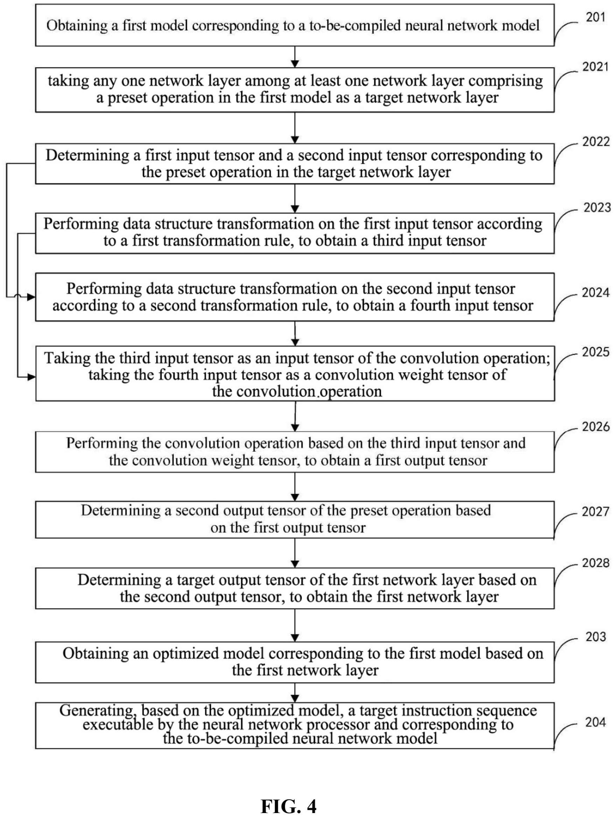

FIG. 4 is a flowchart of a method for compiling a neural network model according to still another illustrative embodiment of this disclosure.

In some optional embodiments, the taking any one network layer among at least one network layer comprising a preset operation in the first model as a target network layer, and converting the preset operation in the target network layer into a convolution operation supported by a neural network processor, to obtain a first network layer of step 202 may specifically comprise steps as follows.

Step 2021, Taking any one network layer among at least one network layer comprising a preset operation in the first model as a target network layer

In an optional example, step 2021 may be executed either by a processor calling respective instructions stored in a memory, or by a first determining unit that is run by the processor.

Step 2022, Determining a first input tensor and a second input tensor corresponding to the preset operation in the target network layer

The first input tensor and the second input tensor may be determined based on an input tensor of the target network layer and another operation before the preset operation in the target network layer. For example, if the preset operation is a first operation of the target network layer or the target network layer comprises just the preset operation, the first input tensor and the second input tensor may be determined based on the input tensor of the target network layer. If the layer comprises another operation before the preset operation, and input of the preset operation is output of the another operation, the first input tensor and the second input tensor may be determined based on an output tensor of the another operation. The mode of determining the first input tensor and the second input tensor may differ, depending on different specific types of the preset operation. For example, for the matrix-multiplication operation, the preset operation comprises two tensors, i.e., a left matrix (first matrix) and a right matrix (second matrix), and then the two tensors may be set to be the first input tensor and the second input tensor corresponding to the preset operation, respectively. Whereas input of the linear operation comprises just one input tensor, a linear transformation matrix configured for performing the linear operation is a weight parameter obtained by training the target network layer, and then, the input tensor of the linear operation may be set to be the first input tensor, and the linear transformation matrix may be set to be the second input tensor. Therefore, the first input tensor and the second input tensor may be input tensors corresponding to the preset operation that are determined according to a certain rule, and may not be an original input tensor of the preset operation, to facilitate subsequent operation conversion.

In some optional embodiments, there may be one or more first input tensors determined based on different dimensions of the original input tensor of the preset operation. Similarly, there may be one or more second input tensors.

For example, for the batch matrix-multiplication operation, the dimensions of the original input tensors may be a B*M*K batch matrix (i.e., B left matrices) and a B*K*N batch matrix (i.e., B right matrices), then, the number of first input tensors determined is B, and the number of second input tensors is B, with the first input tensors being in one-to-one correspondence to the second input tensors, which may be used for B matrix-multiplication operations, wherein each of the matrix-multiplication operations may be correspondingly converted into one convolution operation, and therefore, the batch matrix-multiplication operation may be converted into B convolution operations. For a preset operation with an original input tensor having more dimensions, the first input tensor and the second input tensor may be determined based on specific characteristics of the operation and characteristics of the convolution operation. For example, the original input tensors are an I*J*M*T tensor and a K*T*N tensor, I*J*M*T representing an array of I rows and J columns of M*T matrices (comprising I*J left matrices with a height M and a width T), K*T*N representing K T*N right matrices, each of the right matrices having the height T and the width N. If I*J*K M*N result matrices are obtained by performing matrix-multiplication operation on the I*J M*T left matrices and the K T*N right matrices, it is determined that the number of first input tensors corresponding to the preset operation is I*J, and the number of second input tensors is K, wherein each of the first input tensors corresponds respectively to each of the second input tensors, for the matrix-multiplication operation, and thereby it may be determined that I*J*K matrix-multiplication operations are to be performed, wherein the matrix-multiplication operations are converted respectively into respective convolution operations, thereby enabling to convert the preset operation into I*J*K convolution operations.

In an optional example, step 2022 may be executed either by a processor calling respective instructions stored in a memory, or by a second determining unit that is run by the processor.

Step 2023, Performing data structure transformation on the first input tensor according to a first transformation rule, to obtain a third input tensor

The first transformation rule may be set based on characteristics of the preset operation and characteristics of the convolution operation, with a setting principle which may be to enable the third input tensor to serve as the input tensor of the convolution operation, and to obtain an operation result of the preset operation through the convolution operation, with specifics of the transformation rule being not limited.

Illustratively, taking the preset operation being the matrix-multiplication operation as an example, the first input tensor is a left matrix and is a two-dimensional tensor. If the input tensor of the convolution operation supported by the neural network processor is a four-dimensional tensor, the two-dimensional matrix may be transformed into a four-dimensional tensor suitable for the convolution operation. For example, an M*K first input tensor (M representing the height of the first input tensor, K representing the width of the first input tensor) is transformed into a 1*1*M*K third input tensor, wherein in 1*1*M*K, the first 1 represents a number of three-dimensional feature data comprised in the third input tensor, the second 1 represents the height of the three-dimensional feature data in the third input tensor, M represents the width of the three-dimensional feature data in the third input tensor, and K represents the number of channels of the three-dimensional feature data in the third input tensor.

In an optional example, step 2023 may be executed either by a processor calling respective instructions stored in a memory, or by a first processing unit that is run by the processor.

Step 2024, Performing data structure transformation on the second input tensor according to a second transformation rule, to obtain a fourth input tensor

The second transformation rule may be set based on the characteristics of the preset operation and of the convolution operation, with a setting principle which may be to enable the fourth input tensor to serve as the weight tensor (or convolution weight tensor) of the convolution operation, and to obtain an operation result of the preset operation through the convolution operation, with specifics of the transformation rule being not limited.

Illustratively, taking the preset operation being the matrix-multiplication operation as an example, the second input tensor corresponding to the preset operation is a right matrix, such as a K*N matrix. A convolution weight tensor of the pointwise convolution operation comprises one or more convolution kernels, wherein a dimension of each convolution kernel is a 1*1*C three-dimensional data, wherein the first 1 represents the height of the convolution kernel, the second 1 represents the width of the convolution kernel, and C represents the number of channels of the convolution kernel; then, the convolution weight tensor may be a N*1*1*C four-dimensional tensor, wherein N represents the number of convolution kernels, i.e., N 1*1*C three-dimensional convolution kernels. Based on this, combining specific operation of the convolution operation and related characteristics of the matrix-multiplication operation, the two-dimensional second input tensor may be transformed into the fourth input tensor, enabling the fourth input tensor to serve as the weight tensor for performing convolution on the third input tensor to obtain the output tensor corresponding to the preset operation. For example, the number C of channels of the convolution weight tensor is the number K of rows of the second input tensor, and the number of convolution kernels of the convolution weight tensor is the number N of columns of the second input tensor.

Step 2023 and step 2024 are in no particular order.

In an optional example, step 2024 may be executed either by a processor calling respective instructions stored in a memory, or by a second processing unit that is run by the processor.

Step 2025, Taking the third input tensor as an input tensor of the convolution operation; taking the fourth input tensor as a convolution weight tensor of the convolution operation

The convolution weight tensor may comprise one or more convolution kernels for performing the convolution operation on the third input tensor. The multiply-accumulate operation of the preset operation may be implemented through the convolution operation with the respective convolution kernel, and then, the preset operation such as the matrix-multiplication operation, the dot-product operation, the linear operation, etc., may be implemented through the one or more convolution kernels.

In an optional example, step 2025 may be executed either by a processor calling respective instructions stored in a memory, or by a third determining unit that is run by the processor.

Step 2026, Performing the convolution operation based on the third input tensor and the convolution weight tensor, to obtain a first output tensor

The convolution operation may be the pointwise convolution operation, and may weight the third input tensor in a depth direction (channel direction) through the one or more convolution kernels comprised in the convolution weight tensor, to obtain the first output tensor with a number of channels same as the number of convolution kernels. Dimension of the first output tensor may be H*W*N, wherein H represents the height, W represents the width, and N represents the number of channels. N may also represent the number of convolution kernels of the convolution weight tensor. Since pointwise convolution does not change the size of the input tensor in the height dimension and the width dimension but just the number of channels, H*W is same as the size of the third input tensor.

In some optional embodiments, there may be one or more first input tensors. For example, there are a plurality of first input tensors if the matrix-multiplication operation of a plurality of left matrices with the same right matrix is to be performed. Each of the first input tensors may be transformed according to the foregoing transformation rule. Alternatively, if the plurality of first input tensors are transformed together as a batch, the plurality of first input tensors may be represented as a data structure S*M*K, and transformed into an S*1*M*K third input tensor, the convolution operation of which with a N*1*1*K convolution weight tensor may be performed to obtain S 1*M*N first output tensors.

In some optional embodiments, there may be a plurality of first input tensors and a plurality of second input tensors, and the number of first input tensors may be same as the number of second input tensors. For example, the batch matrix-multiplication operation may complete matrix multiplication of a B*M*K batch matrix (i.e., B left matrices) respectively with a corresponding B*K*N batch matrix (i.e., B right matrices), to obtain a B*M*N batch matrix. Then, the batch matrix multiplication may be split into B matrix multiplications, which are processed according to the foregoing flow of processing the matrix-multiplication operation.

In some optional embodiments, there are a plurality of first input tensors and a plurality of second input tensors, and the number of first input tensors may differ from the number of second input tensors. For example, in the foregoing example, with the original input tensors, i.e., the I*J*M*T tensor and the K*T*N tensor, the determined I*J M*T left matrices serve as I*J first input tensors, and the determined K T*N right matrices serve as K second input tensors, forming I*J*K input tensor pairs, wherein each of the input tensor pairs may comprise one first input tensor and one second input tensor, corresponding to one matrix-multiplication operation, and the first input tensor and the second input tensor of each of the input tensor pairs are converted according to the foregoing steps, to obtain the corresponding third input tensor and fourth input tensor, then obtaining I*J*K first output tensors.

In actual application, in case of converting one preset operation into a plurality of convolution operations, the plurality of convolution operations may be executed in parallel or in series, specifics of which may be determined according to a scheduling rule of the neural network processor. For example, in case of sufficient resources, the neural network processor may call computing resources for the plurality of convolution operations and execute the plurality of convolution operations in parallel.

In an optional example, step 2026 may be executed either by a processor calling respective instructions stored in a memory, or by a third processing unit that is run by the processor.

Step 2027, Determining a second output tensor of the preset operation based on the first output tensor

The second output tensor may be obtained by performing data structure transformation on the first output tensor. Since the first output tensor obtained by the convolution operation is generally a three-dimensional or four-dimensional tensor, whereas the output tensor of the preset operation may be a one-dimensional or two-dimensional tensor, or an actual data item positioned by dimensions of the data structure of the output tensor of the preset operation may differ from that by the first output tensor of the convolution operation. For example, the number of channels of a convolution result may correspond to the width of an output result of the preset operation, and the width of the convolution result may correspond to the height of the output result of the preset operation. By data structure transformation, the first output tensor is transformed into a tensor with a same data structure as the output tensor of the preset operation. Specific transformation of the first output tensor into the second output tensor may be determined according to specifics of the preset operation, and is not limited in embodiments of this disclosure.

Illustratively, a matrix multiplication result of the matrix-multiplication operation of a M*K (i.e., height*width) matrix with a K*N (i.e., height*width) matrix is an M*N (i.e., height*width) matrix, whereas the first output tensor obtained by the convolution operation is a 1*M*N (i.e., height*width*number of channels) tensor, and an M*N (i.e., height*width) result matrix of the matrix-multiplication operation may be obtained by data structure transformation.

In an optional example, step 2027 may be executed either by a processor calling respective instructions stored in a memory, or by a fourth processing unit that is run by the processor.

Step 2028, Determining a target output tensor of the first network layer based on the second output tensor, to obtain the first network layer

If the preset operation is the last operation or the only operation of the target network layer, the second output tensor may be set to be the output tensor of the target network layer, as well as the target output tensor of the optimized first network layer. By the foregoing transformation, the target network layer may be transformed into the first network layer that is based on the convolution operation.

In an optional example, step 2028 may be executed either by a processor calling respective instructions stored in a memory, or by a fifth processing unit that is run by the processor.

In this embodiment, the first input tensor and the second input tensor of the preset operation are determined, then data structure transformation may be performed on the first input tensor and the second input tensor according to different transformation rules, so that the obtained third input tensor and fourth input tensor can be set to be the input tensor and the convolution weight tensor of the convolution operation, respectively, to facilitate obtaining the operation result of the preset operation through the convolution operation, thereby laying a foundation for accelerating the preset operation based on a neural network processor for accelerating the convolution operation, which helps further improve the speed of inference with the model.

In some optional embodiments, the determining a first input tensor and a second input tensor corresponding to the preset operation in the target network layer of step 2022 may comprise:

determining an operation type of the preset operation; in response to that the operation type of the preset operation is a dot-product operation, taking a first tensor and a second tensor for the dot-product operation as the first input tensor and the second input tensor, respectively; or in response to that the operation type of the preset operation is a matrix-multiplication operation, taking a first matrix and a second matrix on which the matrix-multiplication operation is to be performed as the first input tensor and the second input tensor, respectively; or in response to that the operation type of the preset operation is a linear operation, taking an original input tensor of the linear operation as the first input tensor, and taking a linear transformation matrix of the linear operation as the second input tensor.

The first tensor and the second tensor may be one-dimensional tensors, i.e., vectors. The first matrix and the second matrix may be two-dimensional tensors. The matrix-multiplication operation may comprise a two-dimensional matrix-multiplication operation and a multi-dimensional matrix-multiplication operation. The number of first matrices and the number of second matrices may differ, depending on different dimensions of the matrix-multiplication operation, such as the multi-dimensional matrix-multiplication operation of the foregoing batch matrix-multiplication operation, the multi-dimensional matrix-multiplication operation of an I*J*M*T tensor with a K*T*N tensor, etc. The dot-product operation may also be referred to as a one-dimensional matrix-multiplication operation. For specifics of the dot-product operation, the matrix-multiplication operation, and the linear operation, refer to foregoing content, which is not repeated here. The linear transformation matrix may be a weight parameter obtained by model training. The linear operation is for example a fully connected layer of the model, wherein each network node of the current layer is obtained by linear operation (weighting) on output of a respective node of a preceding layer according to a corresponding weight. The dot-product operation may for example be a self-attention network layer in the model, wherein a dot-product of a query vector and a key vector may be computed. The matrix-multiplication operation may for example be a self-attention network layer in the model, wherein the matrix-multiplication operation of an input tensor with a mapping tensor (which may comprise a query mapping tensor, a key mapping tensor, and a value mapping tensor) may be performed, to obtain a query tensor, a key tensor, and a value tensor.

In this embodiment, the first input tensor and the second input tensor corresponding to the preset operation are determined for different operation types of preset operations, enabling to convert the matrix-multiplication operation, the dot-product operation, and the linear operation into pointwise convolution operations supported by the neural network processor, thereby enabling to accelerate the matrix-multiplication operation, the dot-product operation, and the linear operation in the model based on the neural network processor, which helps improve the speed of inference with the model.

In some optional embodiments, the performing data structure transformation on the first input tensor according to a first transformation rule, to obtain a third input tensor of step 2023 may comprise:
transforming a data structure M*K of the first input tensor into 1 *1 *M*K, to obtain the third input tensor, wherein M represents a number of rows of the first input tensor, and K represents a number of columns of the first input tensor.

When M is greater than 1, the first input tensor may represent the first matrix for the matrix-multiplication operation. When M equals 1 and K is greater than 1, the first input tensor may represent the first tensor for the dot-product operation or the input tensor of the linear operation.

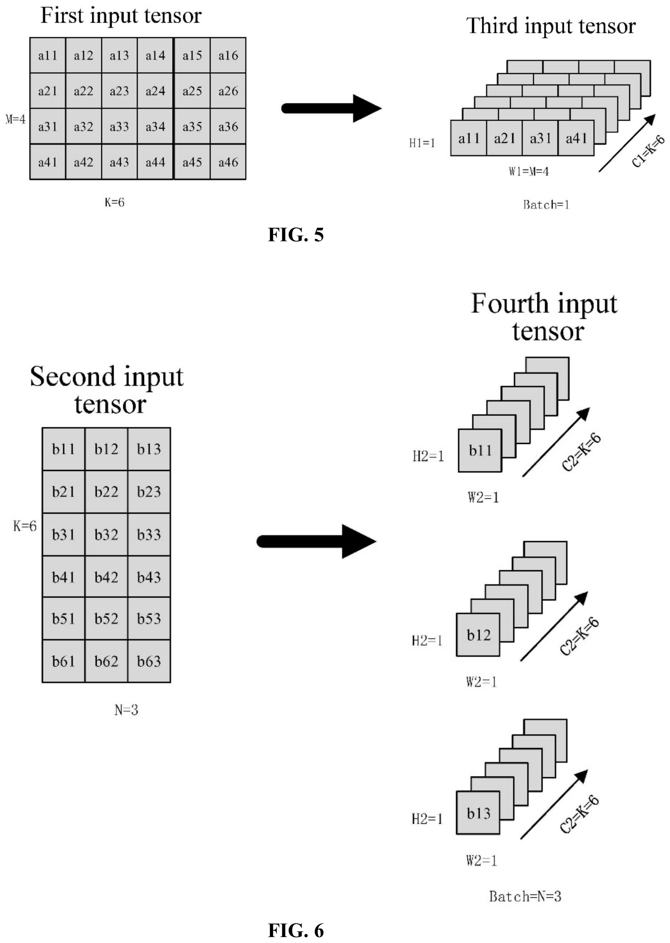

In an optional example, FIG. 5 is a diagram of a principle for transforming a data structure of a first input tensor according to an illustrative embodiment of this disclosure. As shown in FIG. 5, M=4 and K=6. That is, the first input tensor is a two-dimensional tensor with 4 rows and 6 columns. aij (i=1, 2, ... , or M, and j=1, 2, ... , or K) in a gray box represents an element in an i-th row and a j-th column of the first input tensor. The third input tensor is a 1*H1*W1*C1 four-dimensional tensor. In 1* H1*W1*C1, the 1 represents Batch, i.e., the number of M*K first input tensors, H1 represents the height of the third input tensor, H1=1, W1 represents the width of the third input tensor, W1=M=4, and C1 represents the number of channels of the third input tensor, C1=K=6. It may be seen that the six channels at each position in the third input tensor comprise the six elements of a corresponding row of the first input tensor. For example, the six elements a11, a12, ... , and a16 of the first input tensor are comprised at a position 11 along the channel direction, and in convolution, multiply accumulate of the elements with each six-channel convolution kernel of the convolution weight tensor may be performed.

In this embodiment, the data structure M*K of the first input tensor is transformed into 1 *1*M*K, so that the number of channels of the third input tensor is K, enabling, during the convolution operation, to perform multiply accumulate of the K elements of each row of the first input tensor with the K elements of a convolution kernel formed by each column of the second input tensor, to obtain a result of multiply accumulate of each row of the first input tensor and each column of the second input tensor. The result of multiply accumulate is an element of a result matrix of the matrix multiplication of the first input tensor with the second input tensor, thereby getting prepared for implementing the preset operation based on the convolution operation.

In some optional embodiments, the performing data structure transformation on the second input tensor according to a second transformation rule, to obtain a fourth input tensor of step 2024 may comprise:
transforming a data structure K*N of the second input tensor into N*1*1*K, to obtain the fourth input tensor, wherein K in K*N represents a number of rows (i.e., height) of the second input tensor, and N in K*N represents a number of columns (i.e., width) of the second input tensor. In N*1*1*K, N represents the number of three-dimensional data comprised in the fourth input tensor, 1 * 1 represents the height*width of the fourth input tensor, and K represents the number of channels of the fourth input tensor.

When N is greater than 1, the second input tensor may represent the second matrix for the matrix-multiplication operation. When N=1 and K is greater than 1, the second input tensor may represent the second tensor for the dot-product operation or the linear transformation matrix for the linear operation.

In an optional example, FIG. 6 is a diagram of a principle for transforming a data structure of a second input tensor according to an illustrative embodiment of this disclosure. Corresponding to the first input tensor in FIG. 5, as shown in FIG. 6, the second input tensor is a two-dimensional tensor with a number K=6 of rows and a number N=3 of columns. bjn (j=1, 2, ... , or K, and n=1, 2, ... , or N) represents an element in a j-th row and an n-th column of the second input tensor. The fourth input tensor obtained by the data structure transformation is an N*H2*W2*C2 four-dimensional tensor, wherein N represents the number of batches of the fourth input tensor, H2 represents the height of the fourth input tensor, W2 represents the width of the fourth input tensor, and C2 represents the number of channels of the fourth input tensor. It may be seen that the second input tensor may be transformed into a fourth input tensor comprising three 1*1*6 vectors, wherein each of the 1*1*6 vectors may serve as a convolution kernel for the convolution operation with the third input tensor.

In this embodiment, the K*N second input tensor is transformed into a N*1*1*K tensor, enabling the obtained fourth input tensor to serve as N 1*1*K convolution kernels for convolution operation with the third input tensor, wherein such a convolution kernel comprises the K elements of a column of the second input tensor in the channel direction, and in the convolution operation, multiply accumulate of said kernel elements with elements of the K channels at each position of the third input tensor may be performed, implementing multiply accumulate of a respective row of the first input tensor with a respective column of the second input tensor, which enables to obtain the operation result of the preset operation through the convolution operation, which facilitates accelerating the preset operation through the neural network processor, improving the speed of inference with the model.

In some optional embodiments, the transforming a data structure K*N of the second input tensor into N*1*1*K, to obtain the fourth input tensor may comprise:

transforming the data structure K*N of the second input tensor into K*1*1*N, to obtain a first intermediate tensor; and performing the convolution operation on a preset unit tensor by using the first intermediate tensor as weight, to obtain the fourth input tensor of N*1*1*K.

The preset unit tensor may be a 1*1*N*N unit tensor obtained by performing data structure transformation on an N*N identity matrix.

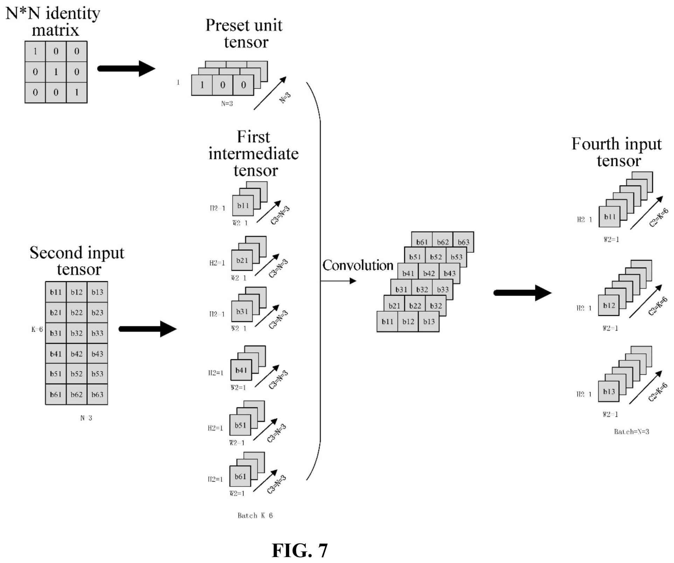

In an optional example, FIG. 7 is a diagram of a principle for transforming a data structure of a second input tensor according to another illustrative embodiment of this disclosure. As shown in FIG. 7, the K*N (i.e., height*width) two-dimensional second input tensor may be transformed into a K*1*1*N (i.e., number*height*width*number of channels) first intermediate tensor, to serve as K 1*1*N convolution kernels, the pointwise convolution operation of which with the 1*1*N*N (i.e., number*height*width*number of channels) preset unit tensor corresponding to the N*N (i.e., height*width) identity matrix is performed, to obtain the N*1*1*K (i.e., number*height*width*number of channels) fourth input tensor.

It should be noted that transformation of the data structure of a tensor may change just a rule of arrangement of elements in the tensor, without changing any specific element values, enabling to adapt the transformed data structure to a data structure needed for a respective operation of the neural network model, thereby enabling to accurately load respective data in the neural network processor to complete inference with the model.

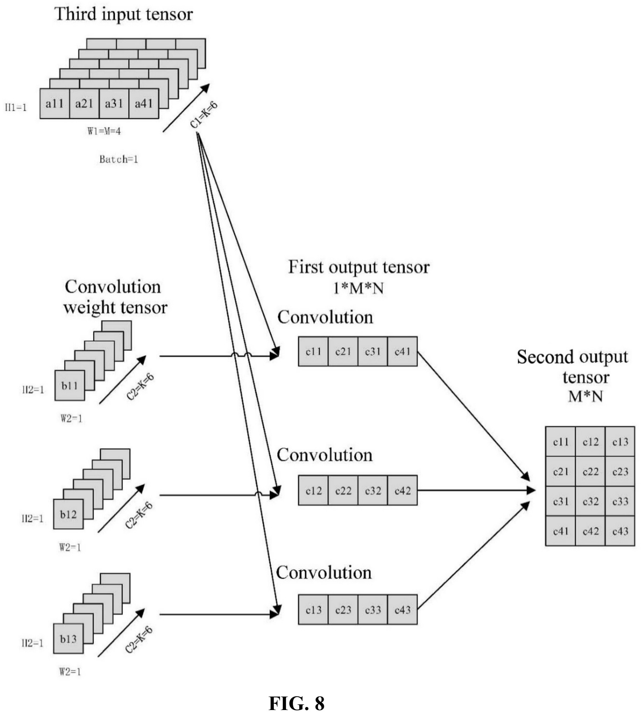

In an optional example, FIG. 8 is a diagram of a principle for convolution operation of a third input tensor with a convolution weight tensor according to an illustrative embodiment of this disclosure. As shown in FIG. 8, the convolution weight tensor may comprise N 1*1*K (i.e., height*width*number of channels) convolution kernels. Pointwise convolution of the convolution weight tensor with the third input tensor may be performed, to obtain the 1*M*N first output tensor, wherein 1 represents the height of the first output tensor, M represents the width of the first output tensor, and N represents the number of channels of the first output tensor. The M*N (height*width) second output tensor may be obtained based on the first output tensor, which is the operation result corresponding to the preset operation. cin (i=1, 2, . . . , or M, and n=1, 2, ... , or N) represents an element in an i-th row and an n-th column of the second output tensor. Taking c11 as an example (other cins being similar), c11 =a11*b11+al2*b21+...+alK*bK1. It may be seen that the second output tensor is an operation result of the matrix-multiplication operation of the first input tensor and the second input tensor. When M=N=1, the second output tensor may be the operation result of the dot-product operation or the linear operation, specifics of which are not repeated.

Respective embodiments of this disclosure may be implemented individually, or implemented in a mode of any combination as long as it causes no conflict, specifics of which may be set as needed, and are not limited in this disclosure.

Any one method for compiling a neural network model according to embodiments of this disclosure may be implemented by any appropriate device capable of data processing, comprising but not limited to a terminal device, a server, etc. Alternatively, the any one method for compiling a neural network model according to embodiments of this disclosure may be implemented by a processor. For example, the processor implements the any one method for compiling a neural network model mentioned in embodiments of this disclosure by calling respective instructions stored in a memory, which is not elaborated hereinafter.

A person of ordinary skill in the art may understand that: all or some of the steps implementing a method embodiment as described above may be completed by instructing related hardware using a program; the foregoing program may be stored in a computer-readable storage medium, and when executed, executes steps comprising the method embodiment as described above; and the foregoing storage medium comprises various media capable of storing a program code, such as a read-only memory (ROM), a random access memory (RAM), a disk or a compact disk read-only memory (CD-ROM), etc.

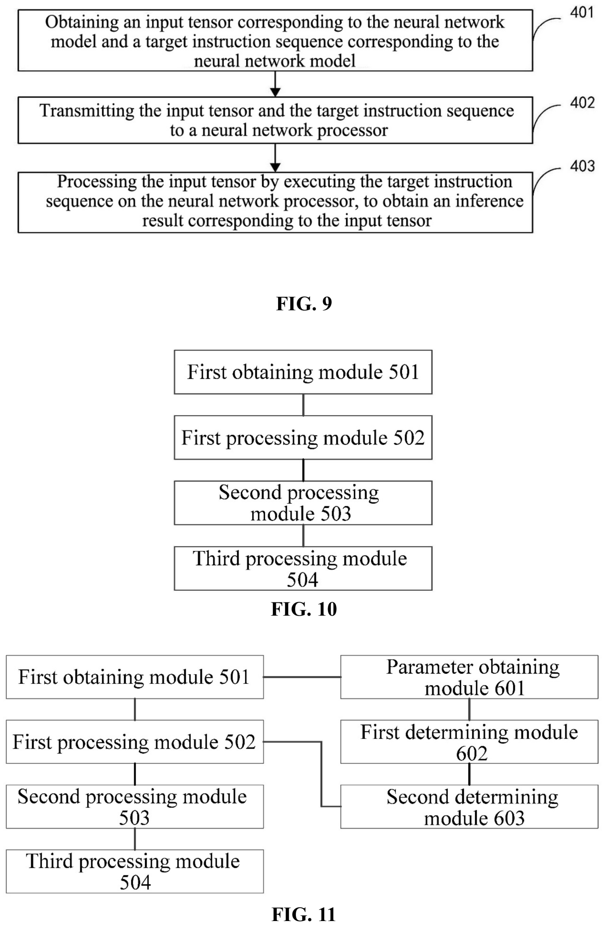

FIG. 9 is a flowchart of a method for inference with a neural network model according to an illustrative embodiment of this disclosure. This embodiment is applicable to an electronic device, specifically such as to an onboard computing platform. As shown in FIG. 9, the method according to embodiments of this disclosure may comprise steps as follows.

Step 401, Obtaining an input tensor corresponding to the neural network model and a target instruction sequence corresponding to the neural network model

The target instruction sequence may be obtained based on the method for compiling a neural network model according to any one foregoing embodiment.

In an optional example, step 401 may be executed either by a processor calling respective instructions stored in a memory, or by a second obtaining module run by a processor.

Step 402, Transmitting the input tensor and the target instruction sequence to a neural network processor.

The neural network processor may comprise a computing array for performing various operations of a neural network. The computing array may comprise a plurality of rows and columns of computing units, wherein the computing units for example may comprise multipliers, adders, multiply-accumulators, etc., specifics of which may be set as needed.

In some optional embodiments, the transmission of the input tensor and the target instruction sequence may be implemented by writing the input tensor and the target instruction sequence into a storage unit in the neural network processor or a storage device external to the neural network processor, and transmitting a storage address to the neural network processor, to have the neural network processor read the input tensor and the target instruction sequence from a respective storage area. A specific mode of calling the neural network processor is not limited.

In some optional embodiments, there may be one or more neural network processors. For a target instruction sequence corresponding to a neural network model, a plurality of neural network processors may be called based on functions of different network layers or different operations functions of the model to implement inference with the model, improving processing efficiency or improving utilization of the neural network processors. For example, when there are a plurality of or a large number of images on which target detection is to be performed, a certain scheduling rule may be set based on a rule such as to balance loads or improve utilization of a plurality of neural network processors, to schedule joint operation of a plurality of neural network accelerators, specifics of which may be set as needed.

In an optional example, step 402 may be executed either by a processor calling respective instructions stored in a memory, or by a transmitting module run by a processor.

Step 403, Processing the input tensor by executing the target instruction sequence on the neural network processor, to obtain an inference result corresponding to the input tensor.

The neural network processor may execute the target instruction sequence. Based on the optimized sequence of instructions, during the process of inference, the neural network processor may implement the original preset operation of the neural network model based on the convolution operation, to obtain the operation result corresponding to the preset operation, and obtain a final inference result in combination with any other inference processes, which further improves the speed of inference with the model, enabling to improve real-time performance in a respective scene of application. For example, in a scene of autonomous driving, a speed of image processing such as target detection or semantic segmentation may be improved. For surrounding environment perception in autonomous driving, a respective perception result may be provided in a more real-time mode, enabling a vehicle to detect an abnormal situation around in a more timely mode, thereby taking respective control measures as soon as possible, improving safety of vehicle driving. Alternatively, in a scene of intelligent cockpit, real-time performance of a perception result for a cockpit user may be improved, to respond to user interaction more timely, improving user experience.

In an optional example, step 403 may be executed either by a processor calling respective instructions stored in a memory, or by the neural network processor.

Any one method for inference with a neural network model according to embodiments of this disclosure may be implemented by any appropriate device capable of data processing, comprising but not limited to a terminal device, a server, etc. Alternatively, the any one method for inference with a neural network model according to embodiments of this disclosure may be implemented by a processor. For example, the processor implements the any one method for inference with a neural network model mentioned in embodiments of this disclosure by calling respective instructions stored in a memory, which is not elaborated hereinafter.

A person of ordinary skill in the art may understand that: all or some of the steps implementing a method embodiment as described above may be completed by instructing related hardware using a program; the foregoing program may be stored in a computer-readable storage medium, and when executed, executes steps comprising the method embodiment as described above; and the foregoing storage medium comprises various media capable of storing a program code, such as a read-only memory (ROM), a random access memory (RAM), a disk or a compact disk read-only memory (CD-ROM), etc.

<u>Illustrative apparatus</u>

FIG. 10 is a diagram of a structure of an apparatus for compiling a neural network model according to an illustrative embodiment of this disclosure. The apparatus according to the embodiment may be configured for implementing the method for compiling a neural network model according to respective embodiments of this disclosure. The apparatus shown in FIG. 10 may comprise a first obtaining module 501, a first processing module 502, a second processing module 503, and a third processing module 504.

The first obtaining module 501 may be configured for obtaining a first model corresponding to a to-be-compiled neural network model.

The first processing module 502 may be configured for taking any one network layer among at least one network layer comprising a preset operation in the first model as a target network layer, and converting the preset operation in the target network layer into a convolution operation supported by a neural network processor, to obtain a first network layer, wherein the preset operation is an operation comprising a multiply-accumulate operation.

The second processing module 503 may be configured for obtaining an optimized model corresponding to the first model based on the first network layer.

The third processing module 504 may be configured for generating, based on the optimized model, a target instruction sequence executable by the neural network processor and corresponding to the to-be-compiled neural network model.

FIG. 11 is a diagram of a structure of an apparatus for compiling a neural network model according to another illustrative embodiment of this disclosure.

In some optional embodiments, the apparatus according to embodiments of this disclosure may further comprise a parameter obtaining module 601, a first determining module 602, and a second determining module 603.

The parameter obtaining module 601 may be configured for obtaining an operation parameter for any one network layer of the first model.

The first determining module 602 may be configured for determining, based on the operation parameter and a preset determination rule, a state of whether the any one network layer of the first model comprises the preset operation.

The second determining module 603 may be configured for, in response to that the state is an inclusion state, determining that the any one network layer of the first model is a network layer comprising the preset operation.

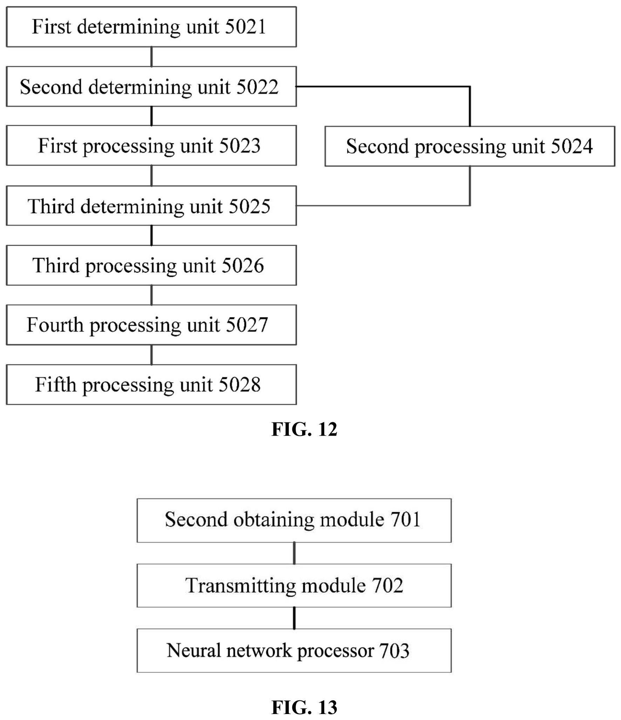

FIG. 12 is a diagram of a structure of a first processing module 502 according to an illustrative embodiment of this disclosure.

In some optional embodiments, the first processing module 502 may comprise a first determining unit 5021, a second determining unit 5022, a first processing unit 5023, a second processing unit 5024, a third determining unit 5025, a third processing unit 5026, a fourth processing unit 5027, and a fifth processing unit 5028.

The first determining unit 5021 may be configured for taking any one network layer among at least one network layer comprising a preset operation in the first model as a target network layer.

The second determining unit 5022 may be configured for determining a first input tensor and a second input tensor corresponding to the preset operation in the target network layer.

The first processing unit 5023 may be configured for performing data structure transformation on the first input tensor according to a first transformation rule, to obtain a third input tensor.

The second processing unit 5024 may be configured for performing data structure transformation on the second input tensor according to a second transformation rule, to obtain a fourth input tensor.

The third determining unit 5025 may be configured for taking the third input tensor as an input tensor of the convolution operation, and taking the fourth input tensor as a convolution weight tensor of the convolution operation.

The third processing unit 5026 may be configured for performing the convolution operation based on the third input tensor and the convolution weight tensor, to obtain a first output tensor.

The fourth processing unit 5027 may be configured for determining a second output tensor of the preset operation based on the first output tensor.

The fifth processing unit 5028 may be configured for determining a target output tensor of the first network layer based on the second output tensor, to obtain the first network layer.

In some optional embodiments, the second determining unit 5022 may specifically be configured for: determining an operation type of the preset operation; in response to that the operation type of the preset operation is a dot-product operation, taking a first tensor and a second tensor for the dot-product operation as the first input tensor and the second input tensor, respectively; or in response to that the operation type of the preset operation is a matrix-multiplication operation, taking a first matrix and a second matrix on which the matrix-multiplication operation is to be performed as the first input tensor and the second input tensor, respectively; or in response to that the operation type of the preset operation is a linear operation, taking an original input tensor of the linear operation as the first input tensor, and taking a linear transformation matrix of the linear operation as the second input tensor.

In some optional embodiments, the first processing unit 5023 may specifically be configured for:

transforming a data structure M*K of the first input tensor into 1 *1 *M*K, to obtain the third input tensor, wherein M represents a number of rows of the first input tensor, and K represents a number of columns of the first input tensor.

In some optional embodiments, the second processing unit 5024 may specifically be configured for: transforming a data structure K*N of the second input tensor into N*1*1*K, to obtain the fourth input tensor, wherein K represents a number of rows of the second input tensor, and N represents a number of columns of the second input tensor.

In some optional embodiments, the second processing unit 5024 may specifically be configured for: transforming the data structure K*N of the second input tensor into K*1*1*N, to obtain a first intermediate tensor; and performing the convolution operation on a preset unit tensor by using the first intermediate tensor as weight, to obtain the fourth input tensor of N*1*1*K.

For beneficial technical effects corresponding to illustrative embodiments of this apparatus, reference may be made to respective beneficial technical effects in the foregoing illustrative method section, which are not repeated here.

FIG. 13 is a diagram of a structure of an apparatus for inference with a neural network model according to an illustrative embodiment of this disclosure. The apparatus according to the embodiment may be configured for implementing the method for inference with a neural network model according to respective embodiments of this disclosure. The apparatus shown in FIG. 13 may comprise a second obtaining module 701, a transmitting module 702, and a neural network processor 703.

The second obtaining module 701 may be configured for obtaining an input tensor corresponding to the neural network model and a target instruction sequence corresponding to the neural network model.

The target instruction sequence may be obtained based on the method for compiling a neural network model according to any one foregoing embodiment.

The transmitting module 702 may be configured for transmitting the input tensor and the target instruction sequence to a neural network processor 703.

The neural network processor 703 may be configured for processing the input tensor by executing the target instruction sequence, to obtain an inference result corresponding to the input tensor.

There may be one or more neural network processors 703, specifics of which may be set as needed.

For beneficial technical effects corresponding to illustrative embodiments of this apparatus, reference may be made to respective beneficial technical effects in the foregoing illustrative method section, which are not repeated here.

Illustrative electronic device

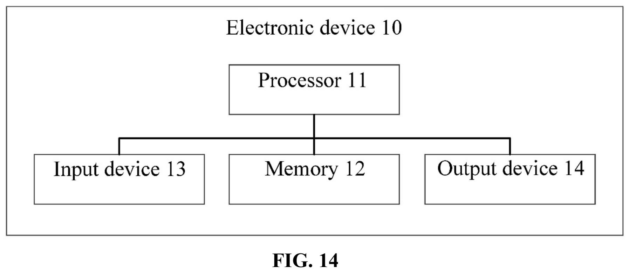

FIG. 14 is a diagram of a structure of an electronic device according to an embodiment of this disclosure. The electronic device comprises at least one processor 11 and a memory 12.

The processor 11 may be a central processing unit (CPU) or another form of processing unit having a data processing capability and/or an instruction execution capability, and may control other components in the electronic device 10 to implement desired functions.

The memory 12 may comprise one or more computer program products, which may comprise various forms of computer-readable storage media, such as a volatile memory and/or a non-volatile memory. The volatile memory may comprise, for example, random access memory (RAM) and/or cache. The nonvolatile memory may comprise, for example, read-only memory (ROM), hard disk, flash memory, etc. One or more computer program instructions may be stored on the computer-readable storage medium. The processor 11 may execute one or more of the program instructions to implement the method according to the various embodiments of this disclosure that are described above and/or other desired functions.

In an example, the electronic device 10 may further comprise an input device 13 and an output device 14. These components are connected to each other through a bus system and/or another form of connection mechanism (not shown).

The input device 13 may further comprise, for example, a keyboard, a mouse, etc.

The output device 14 may output various information to the outside, and may comprise, for example, a display, a speaker, a printer, a communication network, and a remote output device connected to the communication network, etc.

Of course, for simplicity, FIG. 14 shows only some of components in the electronic device 10 that are related to this disclosure, and components such as a bus, an input/output interface, etc., are omitted. In addition, according to specific application situations, the electronic device 10 may further comprise any other appropriate components.

Illustrative computer program product and computer-readable storage medium

In addition to the foregoing method and device, embodiments of this disclosure may also relate to a computer program product, which comprises computer program instructions. When the instructions are run by a processor, the processor is enabled to perform the steps, of the method according to the embodiments of this disclosure, that are described in the "Illustrative method" section of this specification.

The computer program product may be program code, written with one or any combination of a plurality of programming languages, that is configured to perform the operations in the embodiments of this disclosure. The programming languages comprise an target-oriented programming language such as Java or C++, and further comprise a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of this disclosure may further relate to a computer-readable storage medium, which stores computer program instructions. When the computer program instructions are run by the processor, the processor is enabled to perform the steps, of the method according to the embodiments of this disclosure, that are described in the "Illustrative method" section of this specification.

The computer-readable storage medium may be one readable medium or any combination of a plurality of readable media. The readable medium may be a readable signal medium or a readable storage medium. The readable storage medium may comprise, for example but is not limited to electricity, magnetism, light, electromagnetism, infrared ray, or a semiconductor system, an apparatus, or a device, or any combination of the above. More specific examples (a non-exhaustive list) of the readable storage medium comprise: an electrical connection having one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, advantages, superiorities, effects, etc., mentioned in this disclosure are merely examples but are not for limitation, and it cannot be considered that these advantages, superiorities, effects, etc., are necessary for each embodiment of this disclosure. Specific details described above are merely for examples and for ease of understanding, rather than limitations. The details described above do not limit that this disclosure must be implemented by using the foregoing specific details.

A person skilled in the art may make various modifications and variations to this disclosure without departing from the spirit and the scope of this application. In this way, if these modifications and variations of this application fall within the scope of the claims and equivalent technologies of the claims of this disclosure, this disclosure also intends to comprise these modifications and variations.

**Claims**

1. A method for compiling a neural network model, comprising:

   obtaining a first model corresponding to a to-be-compiled neural network model;
   taking any one network layer among at least one network layer comprising a preset operation in the first model as a target network layer, and converting the preset operation in the target network layer into a convolution operation supported by a neural network processor, to obtain a first network layer, wherein the preset operation is an operation comprising a multiply-accumulate operation;
   obtaining an optimized model corresponding to the first model based on the first network layer; and
   generating, based on the optimized model, a target instruction sequence executable by the neural network processor and corresponding to the to-be-compiled neural network model.

2. The method according to claim 1, wherein the converting the preset operation in the target network layer into a convolution operation supported by a neural network processor, to obtain a first network layer comprises:

   determining a first input tensor and a second input tensor corresponding to the preset operation;
   performing data structure transformation on the first input tensor according to a first transformation rule, to obtain a third input tensor;
   performing data structure transformation on the second input tensor according to a second transformation rule, to obtain a fourth input tensor;
   taking the third input tensor as an input tensor of the convolution operation;
   taking the fourth input tensor as a convolution weight tensor of the convolution operation;
   performing the convolution operation based on the third input tensor and the convolution weight tensor, to obtain a first output tensor;
   determining a second output tensor of the preset operation based on the first output tensor; and
   determining a target output tensor of the first network layer based on the second output tensor, to obtain the first network layer.

3. The method according to claim 2, wherein the performing data structure transformation on the first input tensor according to a first transformation rule, to obtain a third input tensor comprises:
transforming a data structure M*K of the first input tensor into 1 *1*M*K, to obtain the third input tensor, wherein M represents a number of rows of the first input tensor, and K represents a number of columns of the first input tensor.

4. The method according to claim 2, wherein the performing data structure transformation on the second input tensor according to a second transformation rule, to obtain a fourth input tensor comprises:
transforming a data structure K*N of the second input tensor into N*1*1*K, to obtain the fourth input tensor, wherein K represents a number of rows of the second input tensor, and N represents a number of columns of the second input tensor.

5. The method according to claim 4, wherein the transforming a data structure K*N of the second input tensor into N*1*1*K, to obtain the fourth input tensor comprises:

   transforming the data structure K*N of the second input tensor into K*1*1*N, to obtain a first intermediate tensor; and
   performing the convolution operation on a preset unit tensor by using the first intermediate tensor as weight, to obtain the fourth input tensor of N*1*1*K.

6. The method according to claim 2, wherein the determining a first input tensor and a second input tensor corresponding to the preset operation comprises:

   determining an operation type of the preset operation;
   in response to that the operation type of the preset operation is a dot-product operation, taking a first tensor and a second tensor for the dot-product operation as the first input tensor and the second input tensor, respectively; or
   in response to that the operation type of the preset operation is a matrix-multiplication operation, taking a first matrix and a second matrix on which the matrix-multiplication operation is to be performed as the first input tensor and the second input tensor, respectively; or
   in response to that the operation type of the preset operation is a linear operation, taking an original input tensor of the linear operation as the first input tensor, and taking a linear transformation matrix of the linear operation as the second input tensor.

7. The method according to claim 1, further comprising: after the obtaining a first model corresponding to a to-be-compiled neural network model,

   obtaining an operation parameter for any one network layer of the first model;
   determining, based on the operation parameter and a preset determination rule, a state of whether the any one network layer of the first model comprises the preset operation; and
   in response to that the state is an inclusion state, determining that the any one network layer of the first model is a network layer comprising the preset operation.

8. A method for inference with a neural network model, comprising:

   obtaining an input tensor corresponding to the neural network model and a target instruction sequence corresponding to the neural network model, wherein the target instruction sequence is obtained based on the method for compiling a neural network model according to any one of claims 1 to 7;
   transmitting the input tensor and the target instruction sequence to a neural network processor; and
   processing the input tensor by executing the target instruction sequence on the neural network processor, to obtain an inference result corresponding to the input tensor.

9. An apparatus for compiling a neural network model, comprising:

   a first obtaining module, configured for obtaining a first model corresponding to a to-be-compiled neural network model;
   a first processing module, configured for taking any one network layer among at least one network layer comprising a preset operation in the first model as a target network layer, and converting the preset operation in the target network layer into a convolution operation supported by a neural network processor, to obtain a first network layer, wherein the preset operation is an operation comprising a multiply-accumulate operation;
a second processing module, configured for obtaining an optimized model corresponding to the first model based on the first network layer; and
a third processing module, configured for generating, based on the optimized model, a target instruction sequence executable by the neural network processor and corresponding to the to-be-compiled neural network model.

10. An apparatus for inference with a neural network model, comprising:

a second obtaining module, configured for obtaining an input tensor corresponding to the neural network model and a target instruction sequence corresponding to the neural network model, wherein the target instruction sequence is obtained based on the method for compiling a neural network model according to any one of claims 1 to 7;
a transmitting module, configured for transmitting the input tensor and the target instruction sequence to a neural network processor; and
the neural network processor, configured for processing the input tensor by executing the target instruction sequence, to obtain an inference result corresponding to the input tensor.

11. A computer-readable storage medium, wherein the storage medium stores a computer program, and the computer program is configured for implementing the method for compiling a neural network model according to any one of claims 1 to 7.

12. An electronic device, comprising:

a processor; and
a memory configured for storing processor-executable instructions, wherein
the processor is configured for reading the executable instructions from the memory, and executing the instructions to implement the method for compiling a neural network model according to any one of claims 1 to 7.

To-be-compiled neural network model → Front end — Intermediate representation → Middle end (optimization) — Optimized model → Back end → Target instruction sequence executable by neural network processor

**FIG. 1**

| |
|---|
| Obtaining a first model corresponding to a to-be-compiled neural network model |

201

| |
|---|
| Taking any one network layer among at least one network layer comprising a preset operation in the first model as a target network layer, and converting the preset operation in the target network layer into a convolution operation supported by a neural network processor, to obtain a first network layer, wherein the preset operation is an operation comprising a multiply-accumulate operation |

202

| |
|---|
| Obtaining an optimized model corresponding to the first model based on the first network layer |

203

| |
|---|
| Generating, based on the optimized model, a target instruction sequence executable by the neural network processor and corresponding to the to-be-compiled neural network model |

204

**FIG. 2**

Obtaining a first model corresponding to
a to-be-compiled neural network model — 201

Obtaining an operation parameter for any one network layer of the first model — 301

Determining, based on the operation parameter and a preset determination
rule, a state of whether the any one network layer of the first model
comprises the preset operation — 302

In response to that the state is an inclusion state, determining that the any one
network layer of the first model is a network layer comprising
the preset operation — 303

Taking any one network layer among at least one network layer comprising
a preset operation in the first model as a target network layer, and converting
the preset operation in the target network layer into a convolution operation
supported by a neural network processor, to obtain a first network layer,
wherein the preset operation is an operation comprising a
multiply-accumulate operation — 202

Obtaining an optimized model corresponding to the first model based on
the first network layer — 203

Generating, based on the optimized model, a target instruction sequence
executable by the neural network processor and corresponding to the
to-be-compiled neural network model — 204

**FIG. 3**

Obtaining a first model corresponding to a to-be-compiled neural network model — 201

taking any one network layer among at least one network layer comprising a preset operation in the first model as a target network layer — 2021

Determining a first input tensor and a second input tensor corresponding to the preset operation in the target network layer — 2022

Performing data structure transformation on the first input tensor according to a first transformation rule, to obtain a third input tensor — 2023

Performing data structure transformation on the second input tensor according to a second transformation rule, to obtain a fourth input tensor — 2024

Taking the third input tensor as an input tensor of the convolution operation; taking the fourth input tensor as a convolution weight tensor of the convolution operation — 2025

Performing the convolution operation based on the third input tensor and the convolution weight tensor, to obtain a first output tensor — 2026

Determining a second output tensor of the preset operation based on the first output tensor — 2027

Determining a target output tensor of the first network layer based on the second output tensor, to obtain the first network layer — 2028

Obtaining an optimized model corresponding to the first model based on the first network layer — 203

Generating, based on the optimized model, a target instruction sequence executable by the neural network processor and corresponding to the to-be-compiled neural network model — 204

**FIG. 4**

## First input tensor

| a11 | a12 | a13 | a14 | a15 | a16 |
|-----|-----|-----|-----|-----|-----|
| a21 | a22 | a23 | a24 | a25 | a26 |
| a31 | a32 | a33 | a34 | a35 | a36 |
| a41 | a42 | a43 | a44 | a45 | a46 |

M=4

K=6

## Third input tensor

H1=1 | a11 | a21 | a31 | a41 |

W1=M=4

C1=K=6

Batch=1

**FIG. 5**

## Second input tensor

| b11 | b12 | b13 |
|-----|-----|-----|
| b21 | b22 | b23 |
| b31 | b32 | b33 |
| b41 | b42 | b43 |
| b51 | b52 | b53 |
| b61 | b62 | b63 |

K=6

N=3

## Fourth input tensor

H2=1 | b11 | C2=K=6
W2=1

H2=1 | b12 | C2=K=6
W2=1

H2=1 | b13 | C2=K=6
W2=1

Batch=N=3

**FIG. 6**

**FIG. 7**

**FIG. 8**

Obtaining an input tensor corresponding to the neural network model and a target instruction sequence corresponding to the neural network model — 401

Transmitting the input tensor and the target instruction sequence to a neural network processor — 402

Processing the input tensor by executing the target instruction sequence on the neural network processor, to obtain an inference result corresponding to the input tensor — 403

**FIG. 9**

First obtaining module 501

First processing module 502

Second processing module 503

Third processing module 504

**FIG. 10**

First obtaining module 501 —— Parameter obtaining module 601

First processing module 502 —— First determining module 602

Second processing module 503 —— Second determining module 603

Third processing module 504

**FIG. 11**

First determining unit 5021

Second determining unit 5022

First processing unit 5023

Second processing unit 5024

Third determining unit 5025

Third processing unit 5026

Fourth processing unit 5027

Fifth processing unit 5028

**FIG. 12**

Second obtaining module 701

Transmitting module 702

Neural network processor 703

**FIG. 13**

Electronic device 10

Processor 11

Input device 13    Memory 12    Output device 14

**FIG. 14**

## INTERNATIONAL SEARCH REPORT

| International application No. |
|---|
| **PCT/CN2024/092000** |

| A. CLASSIFICATION OF SUBJECT MATTER |
|---|
| G06N 3/10(2006.01)i |
| According to International Patent Classification (IPC) or to both national classification and IPC |

| B. FIELDS SEARCHED |
|---|
| Minimum documentation searched (classification system followed by classification symbols) |
| IPC: G06N: G06F |
| Documentation searched other than minimum documentation to the extent that such documents are included in the fields searched |
| Electronic data base consulted during the international search (name of data base and, where practicable, search terms used) |
| CNABS, CNTXT, VCN, VEN, ENTXT, CJFD, CNKI, IEEE: 神经网络, 模型, 编译, 点积, 矩阵, 线性, 转换, 卷积, model, compil+, matrix, convert+, optimiz+, convolut+ |

| C. | DOCUMENTS CONSIDERED TO BE RELEVANT | |
|---|---|---|
| Category* | Citation of document, with indication, where appropriate, of the relevant passages | Relevant to claim No. |
| PX | CN 116542325 A (BEIJING HORIZON INFORMATION TECHNOLOGY CO., LTD.) 04 August 2023 (2023-08-04)<br>claims 1-12 | 1-12 |
| X | CN 114239803 A (BEIJING HORIZON ROBOTICS TECHNOLOGY RESEARCH AND DEVELOPMENT CO., LTD.) 25 March 2022 (2022-03-25)<br>description, paragraphs 0042-0080 | 1-12 |
| X | CN 115543337 A (BEIJING HORIZON INFORMATION TECHNOLOGY CO., LTD.) 30 December 2022 (2022-12-30)<br>description, paragraphs 0050-0074 | 1-12 |
| X | CN 115857940 A (BEIJING HORIZON INFORMATION TECHNOLOGY CO., LTD.) 28 March 2023 (2023-03-28)<br>description, paragraphs 0046-0096 | 1-12 |
| A | CN 111461311 A (UNIVERSITY OF SCIENCE AND TECHNOLOGY OF CHINA) 28 July 2020 (2020-07-28)<br>entire document | 1-12 |

☑ Further documents are listed in the continuation of Box C. ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **09 July 2024** | **17 July 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/092000**

C.   DOCUMENTS CONSIDERED TO BE RELEVANT

| Category* | Citation of document, with indication, where appropriate, of the relevant passages | Relevant to claim No. |
|---|---|---|
| A | CN 113326930 A (HUAWEI TECHNOLOGIES CO., LTD. et al.) 31 August 2021 (2021-08-31) entire document | 1-12 |
| A | US 2020242189 A1 (HEWLETT PACKARD ENTERPRISE DEVELOPMENT LP) 30 July 2020 (2020-07-30) entire document | 1-12 |
| A | US 2023021204 A1 (IMAGINATION TECHNOLOGIES LTD.) 19 January 2023 (2023-01-19) entire document | 1-12 |
| A | US 2022137941 A1 (TSINGHUA UNIVERSITY) 05 May 2022 (2022-05-05) entire document | 1-12 |

Form PCT/ISA/210 (second sheet) (July 2022)

**INTERNATIONAL SEARCH REPORT**
**Information on patent family members**

International application No.

**PCT/CN2024/092000**

| Patent document cited in search report | | | Publication date (day/month/year) | Patent family member(s) | | | Publication date (day/month/year) |
|---|---|---|---|---|---|---|---|
| CN | 116542325 | A | 04 August 2023 | None | | | |
| CN | 114239803 | A | 25 March 2022 | None | | | |
| CN | 115543337 | A | 30 December 2022 | None | | | |
| CN | 115857940 | A | 28 March 2023 | None | | | |
| CN | 111461311 | A | 28 July 2020 | None | | | |
| CN | 113326930 | A | 31 August 2021 | None | | | |
| US | 2020242189 | A1 | 30 July 2020 | None | | | |
| US | 2023021204 | A1 | 19 January 2023 | EP | 4113389 | A1 | 04 January 2023 |
| | | | | GB | 202109342 | D0 | 11 August 2021 |
| | | | | GB | 2608791 | A | 18 January 2023 |
| | | | | CN | 115545174 | A | 30 December 2022 |
| US | 2022137941 | A1 | 05 May 2022 | CN | 112328227 | A | 05 February 2021 |

Form PCT/ISA/210 (patent family annex) (July 2022)

**EP 4 708 151 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310597929